# EUROPEAN PATENT APPLICATION

(11) **EP 4 672 445 A1**
(43) Date of publication of application: **31.12.2025**
(21) Application number: 24760210.5
(22) Date of filing: 14.02.2024
(51) Int. Cl.: H01M 50/152, H01M 50/167, H01M 50/179, H01M 50/342

(54) **SEALED BATTERY**

(30) Priority: 21.02.2023 JP 2023025071
(71) Applicant: Panasonic Energy Co., Ltd., Osaka 570-8511 (JP)
(72) Inventor: DAVIS, Jerome, kadoma-shi, Osaka 571-0057 (JP); IMANISHI, Yosuke, kadoma-shi, Osaka 571-0057 (JP)
(74) Representative: Eisenführ Speiser
(86) International application number: PCT/JP2024/004986
(87) International publication number: WO 2024/176908

(57) **Abstract**

A sealed battery according to one embodiment of the present invention comprises: an electrode body (14) in which a positive electrode plate (11) and a negative electrode plate (12) are stacked with a separator (13) therebetween; an exterior body which houses the electrode body and has an opening at one end; and a sealing body (19) which closes the opening of the exterior body. The sealing body has an identification label (30) formed on a movable portion so as to be separated from the exterior body when the internal pressure of the battery has increased.

## Description

### TECHNICAL FIELD

The present disclosure relates to a sealed battery.

### BACKGROUND ART

Conventionally known is a sealed battery provided with an identification mark (for example, see PATENT LITERATURES 1 and 2). The identification mark makes it possible to specify production lines, production date, and the like of the battery. If a failure occurs for some reason in a process of producing a battery or after shipment of a battery, for example, the identification mark is used to analyze a cause of the failure.

PATENT LITERATURE 1 discloses that an identification bar code (identification mark) is provided on an outer circumferential surface or an end surface of a battery can. PATENT LITERATURE 2 discloses that, in a prismatic secondary battery comprising a rectangular outer housing body, a sealing assembly that closes an opening of the rectangular outer housing body provided with an identification code (identification mark) at a position different from a gas discharge vent.

### CITATION LIST

### PATENT LITERATURE

PATENT LITERATURE 1: Japanese Translation of PCT International Application Publication No. 2015-524142
PATENT LITERATURE 2: Japanese Unexamined Patent Application Publication No. 2019-29189

### SUMMARY

In a case where an identification mark is provided on an outer circumferential surface of a battery can as in the configurations disclosed in PATENT LITERATURE 1, in producing processes of a battery module including a plurality of batteries, a battery holder, and the like, another component such as the battery holder contacts the outer circumferential surface of the battery, which may cause damage to the identification mark. This may make it difficult to read the identification mark. Alternatively, in a case where an identification mark is provided on an outer circumferential surface or an end surface of a battery or at a position different from a gas discharge vent in a sealing assembly, if heat is abnormally generated in the battery, the battery is heated to a high temperature, causing discoloration or deformation of the identification mark, possibly also making it difficult to read the identification mark.

A sealed battery according to the present disclosure comprises an electrode assembly in which a positive electrode plate and a negative electrode plate are stacked with a separator interposed between the positive electrode plate and the negative electrode plate, an outer housing body that houses the electrode assembly, and has an opening at one end of the outer housing body, and a sealing assembly that closes the opening of the outer housing body, in which the sealing assembly has an identification mark formed on a portion movable away from the outer housing body in a case where an internal pressure of the battery increases.

According to the sealed battery according to the present disclosure, the identification mark can be provided on the portion that is less likely to come into contact with another component in producing processes of a battery module including the battery and that is movable away from the battery before being exposed to a high temperature when heat is abnormally generated in the battery. This can make it easy to read the identification mark both after the battery is mounted in the battery module and after heat is abnormally generated.

### BRIEF DESCRIPTION OF DRAWINGS

FIG. 1 is a diagram schematically illustrating an axial sectional view of a cylindrical battery as a sealed battery which is one example of an embodiment.
FIG. 2(a) is a schematic view of the cylindrical battery in FIG. 1 as viewed from the side, and FIG. 2(b) is a diagram of a portion A in FIG. 2(a) as viewed from above.
FIG. 3(a) is a schematic view illustrating a state in which a vent portion in a sealing assembly has blown away due to an increase in internal pressure of the battery when heat is abnormally generated in the cylindrical battery in FIG. 1, and FIG. 3(b) is a diagram illustrating an outer surface of the vent portion illustrated in a portion B in FIG. 3(a).
FIG. 4 is a schematic view illustrating a state in which a temperature of the cylindrical battery further rises after the state in FIG. 3(a).
FIG. 5 is a diagram corresponding to FIG. 2(b), in a cylindrical battery as a sealed battery which is another example of the embodiment.
FIG. 6 is a schematic view illustrating a state in which, when heat is abnormally generated, a rupture plate of a sealing assembly ruptures and a vent portion is deformed to be moved outward, in another example of the embodiment.

### DESCRIPTION OF EMBODIMENTS

Hereinafter, one example of an embodiment of a sealed battery according to the present disclosure will be described in detail with reference to the drawings. The embodiment described below is only an example, and the present disclosure is not limited to the embodiment described below. Forms obtained by selectively combining each component of the embodiment described below are included in the present disclosure.

Hereinafter, as the sealed battery, a cylindrical battery 10 in which a wound electrode assembly 14 is housed in a bottomed cylindrical outer housing can 20 is illustrated, but an outer housing body of the battery is not limited to a cylindrical outer housing can. The sealed battery according to the present disclosure may be, for example, a prismatic battery comprising a rectangular outer housing can.

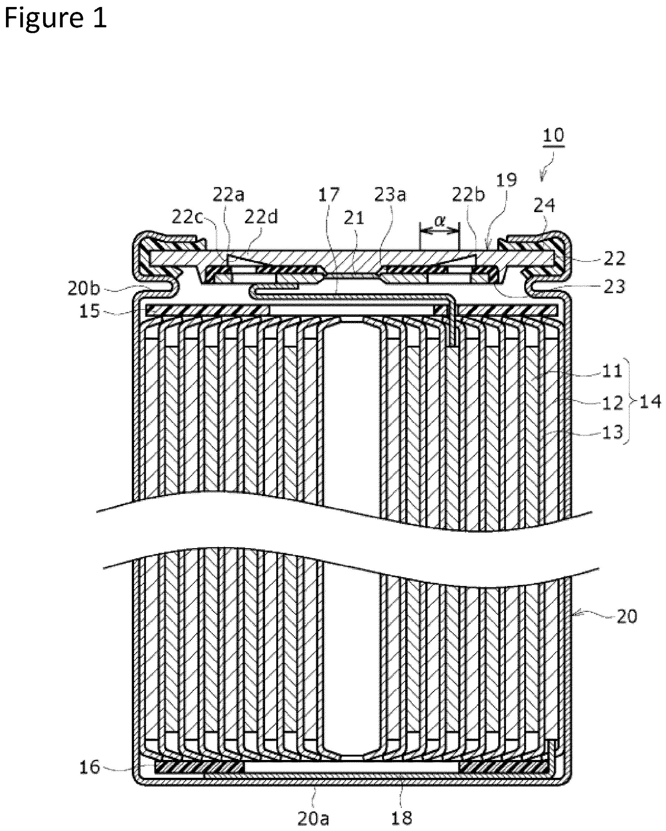

FIG. 1 is a diagram schematically illustrating an axial sectional view of the cylindrical battery 10 as a sealed battery which is one example of the embodiment. As illustrated in FIG. 1, the cylindrical battery 10 comprises the electrode assembly 14, an electrolyte, and the outer housing can 20 that houses the electrode assembly 14 and the electrolyte. The electrode assembly 14 has a positive electrode plate 11, a negative electrode plate 12, and a separator 13, and has a structure in which the positive electrode plate 11 and the negative electrode plate 12 are stacked with the separator 13 interposed therebetween and are spirally wound. The outer housing can 20 is a bottomed cylindrical metallic container that has an opening at one end in an axial direction, and the opening of the outer housing can 20 is closed with a sealing assembly 19. Hereinafter, for convenience of description, the sealing assembly 19 side of the cylindrical battery 10 will be described as an "upper side", and a bottom portion side of the outer housing can 20 will be described as a "lower side".

The electrolyte may be an aqueous electrolyte, but a non-aqueous electrolyte shall be used in the present embodiment. The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. For example, as the electrolyte salt, a lithium salt such as LiPF₆ is used.

Any of the positive electrode plate 11, the negative electrode plate 12, and the separator 13 constituting the electrode assembly 14 is a band-shaped elongated member, and spirally wound to be stacked in the radial direction of the electrode assembly 14. The negative electrode plate 12 is formed to be one size larger than the positive electrode plate 11 in order to prevent precipitation of lithium. That is, the negative electrode plate 12 is formed to be longer in the longitudinal direction and the width direction (short direction) than the positive electrode plate 11. The two separators 13 are each formed to be at least one size larger than the positive electrode plate 11, and are disposed so as to interpose the positive electrode plate 11 therebetween.

The positive electrode plate 11 has a positive electrode core and a positive electrode mixture layer formed on each surface of the positive electrode core. For the positive electrode core, a foil of a metal, such as aluminum or an aluminum alloy, which is stable within a potential range of the positive electrode plate 11, a film in which such a metal is disposed on a surface layer thereof, and the like may be used. The positive electrode mixture layer includes a positive electrode active material, a conductive agent such as carbon black, or a carbon nanotube, and a binder such as polyvinylidene fluoride, and is preferably formed on each surface of the positive electrode core. The positive electrode plate 11 may be produced by: applying a positive electrode mixture slurry including the positive electrode active material, the conductive agent, and the binder on each surface of the positive electrode core; and compressing the resulting coating film.

Examples of the positive electrode active material included in the positive electrode mixture layer include a lithium-transition metal composite oxide. The lithium-transition metal composite oxide is a composite oxide containing metal elements such as Co, Mn, Ni, and Al in addition to Li. A metal element contained in the composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these elements, at least one selected from Ni, Mn, and Co is preferably contained.

The negative electrode plate 12 has a negative electrode core and a negative electrode mixture layer formed on each surface of the negative electrode core. For the negative electrode core, a foil of a metal, such as copper or a copper alloy, which is stable within a potential range of the negative electrode plate 12, a film in which such a metal is disposed on a surface layer thereof, and the like may be used. The negative electrode mixture layer includes a negative electrode active material, a binder, and, as necessary, a conductive agent such as carbon black or a carbon nanotube, and is preferably formed on each surface of the negative electrode core. For the binder, for example, a styrenebutadiene rubber (SBR) may be used, and carboxymethyl cellulose or a salt thereof, or the like may be used in combination therewith. The negative electrode plate 12 may be produced by: applying a negative electrode mixture slurry including the negative electrode active material and the binder on each surface of the negative electrode core; and compressing the resulting coating film.

Examples of the negative electrode active material included in the negative electrode mixture layer include carbon materials such as graphite that reversibly occlude and release lithium ions. The graphite may be any of natural graphite and artificial graphite. For the negative electrode active material, an element that forms an alloy with Li such as Si and Sn, and a material containing the element may be used. Among them, a composite material containing Si is preferably used. A preferable example of the composite material containing Si includes a material including a fine Si phase dispersed in an SiO₂ phase, a silicate phase such as lithium silicate, a carbon phase, or a silicide phase.

For the separator 13, a porous sheet having ion permeability and an insulation property is used. Specific examples of the porous sheet include a microporous thin film, a woven fabric, and a nonwoven fabric. Suitable examples of a material for the separator 13 include a polyolefin such as polyethylene or polypropylene, or a cellulose. The separator 13 may have either a single-layer structure or a multi-layer structure. The separator 13 may have a high heat resistant resin layer such as aramid resin formed on its surface. At least one of interfaces between the separator 13 and the positive electrode plate 11 and between the separator 13 and the negative electrode plate 12 may have a filler layer that contains an inorganic filler.

Insulating plates 15 and 16 are disposed on the upper and lower sides of the electrode assembly 14, respectively. In the example illustrated in FIG. 1, a positive electrode lead 17 extends toward the sealing assembly 19 through a through hole in the insulating plate 15, and a negative electrode lead 18 extends toward a bottom portion 20a of the outer housing can 20 through the outside of the insulating plate 16. The positive electrode lead 17 is connected to a lower surface of an internal terminal plate 21 of the sealing assembly 19, by means of laser welding or the like, and a rupture plate 22 as described later which is a top plate of the sealing assembly 19 electrically connected to the internal terminal plate 21 serves as a positive electrode terminal. The negative electrode lead 18 is connected to an inner surface of the bottom portion 20a of the outer housing can 20, by means of laser welding or the like, and the outer housing can 20 serves as a negative electrode terminal.

The positive electrode lead 17 is joined to the positive electrode core, by means of ultrasonic welding or the like. The positive electrode lead 17 is joined to a longitudinal center portion away from both ends of the positive electrode plate 11 in the longitudinal direction, for example. The positive electrode lead 17 may be joined to a position that is substantially equally distant from both ends of the positive electrode plate 11 in the longitudinal direction. The negative electrode lead 18 is joined to the negative electrode core, by means of ultrasonic welding or the like. In the example illustrated in FIG. 1, the negative electrode lead 18 is joined to a winding finish side end portion which is an end portion of the negative electrode plate 12 in the longitudinal direction that is located on an outer circumferential side of the electrode assembly 14. The positive electrode lead 17 and the negative electrode lead 18 each are, for example, a band-shaped metallic member, and have a thickness of greater than or equal to 30 µm and less than or equal to 100 µm.

The negative electrode plate 12 may be disposed on the outer circumferential surface of the electrode assembly 14. In addition, an exposed portion where a surface of the negative electrode core is exposed may be formed on the outer circumferential surface of the electrode assembly 14, and the exposed portion may contact an inner surface of the outer housing can 20 so that the negative electrode plate 12 and the outer housing can 20 are electrically connected to each other. In this case, the negative electrode plate 12 need not have the negative electrode lead 18.

The outer housing can 20 is the bottomed cylindrical metallic container that has the opening at one end in the axial direction, as described above. A gasket 24 made of resin is provided between the outer housing can 20 and the sealing assembly 19 to achieve the sealability inside the battery and the insulation property between the outer housing can 20 and the sealing assembly 19. The outer housing can 20 has a grooved portion 20b for supporting the sealing assembly 19, the grooved portion 20b being formed by a part of a side surface portion projecting inward. The grooved portion 20b is preferably formed in an annular shape along a circumferential direction of the outer housing can 20 and supports the sealing assembly 19 on an upper surface of the grooved portion 20b. The sealing assembly 19 is fixed to the upper portion of the outer housing can 20 by the grooved portion 20b, and an opening end portion of the outer housing can 20 is crimped and fixed to the sealing assembly 19.

The sealing assembly 19 is a disk-shaped member comprising a current interrupt mechanism. The sealing assembly 19 has a stacked structure of the internal terminal plate 21, an insulating plate 23, and the rupture plate 22 in this order from the electrode assembly 14 side. The internal terminal plate 21 has a thin thickness portion at a center portion thereof, the thin thickness portion having a smaller thickness than that of an outer annular portion connected to the positive electrode lead 17.

The insulating plate 23 is a disk-shaped member made of an insulating material, the member having an opening portion 23a at a center portion thereof. The rupture plate 22 is disposed to face the internal terminal plate 21 with the insulating plate 23 sandwiched therebetween. A center portion of the rupture plate 22 is connected to the thin thickness portion at the center portion of the internal terminal plate 21 by means of welding or the like, through the opening portion 23a in the insulating plate 23.

Furthermore, the rupture plate 22 has an easily rupturable portion 22a in an intermediate portion in a radial direction. The easily rupturable portion 22a is formed by a ring-shaped thin thickness portion 22b formed in a portion in the radial direction of the rupture plate 22. A ring-shaped groove 22c is formed in the radial part of an inner surface (a lower surface in FIG. 1) of the rupture plate 22, so that the easily rupturable portion 22a is formed. The groove for forming the easily rupturable portion 22a may be formed in an outer surface (an upper surface in FIG. 1) of the rupture plate 22. A vent portion 22d is formed by a portion on an inner side in the radial direction with respect to the easily rupturable portion 22a of the rupture plate 22.

The sealing assembly 19 is crimped and fixed by the outer housing can 20 via the gasket 24 on the outer side in the radial direction with respect to the easily rupturable portion 22a. The pressure inside the battery is applied to inside of the groove 22c of the rupture plate 22 through vent holes formed in the internal terminal plate 21 and the insulating plate 23.

When the internal pressure of the battery increases and exceeds a predetermined threshold, the easily rupturable portion 22a of the rupture plate 22 ruptures, and the vent portion 22d on the inner side in the radial direction with respect to the easily rupturable portion 22a is moved away from the outer housing can 20.

In the cylindrical battery 10, the internal terminal plate 21 connected to the positive electrode lead 17 and the rupture plate 22 are electrically connected to each other, so that a current pathway is formed connecting from the electrode assembly 14 to the rupture plate 22. When an abnormality occurs in the battery and the internal pressure increases, the internal terminal plate 21 ruptures, the thin thickness portion of the internal terminal plate 21 is separated from its outer annular portion, and the vent portion 22d is deformed to project toward the outside of the battery. This results in cutting off of the current pathway. When the internal pressure of the battery further increases, the easily rupturable portion 22a ruptures as described above, so that a gas discharge port is formed. At this time, when the easily rupturable portion 22a ruptures around the entire circumference, the vent portion 22d blows away toward outside of the battery. In a case where only a circumferential part of the easily rupturable portion 22a ruptures, and a circumferential part of the vent portion 22d is joined to a remaining portion of the rupture plate 22, the vent portion 22d is deformed to be moved outward. In any case, the vent portion 22d is a portion movable away from the outer housing can 20 in a case where the internal pressure of the battery increases.

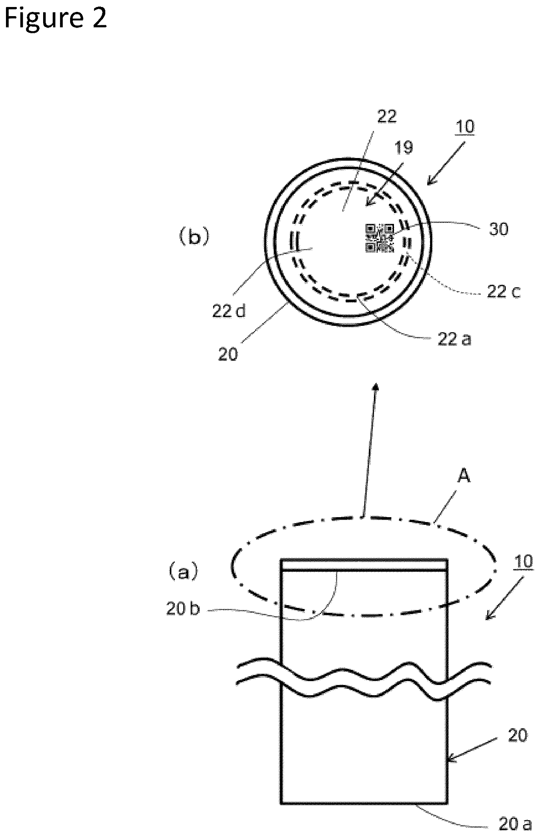

In the outer surface of the rupture plate 22, an identification mark 30 is formed on a portion indicated by an arrow α in FIG. 1. FIG. 2(a) is a schematic view of the cylindrical battery 10 as viewed from the side, and FIG. 2(b) is a diagram of a portion A in FIG. 2(a) as viewed from above.

As illustrated in FIG. 2(b), the sealing assembly 19 has the identification mark 30 formed on the outer surface of the vent portion 22d and on the inner side in the radial direction with respect to the easily rupturable portion 22a. The identification mark 30 is preferably formed at a position apart from a center of the vent portion 22d to avoid a position of connecting an external lead provided in a positive terminal plate not illustrated to the rupture plate 22.

The identification mark 30 is an individual mark attached to the cylindrical battery 10, and provides identification information for differentiating it from another cylindrical battery 10. The identification marks 30 are provided to be different for each of the cylindrical batteries 10 or for each group including a predetermined number of cylindrical batteries 10. The identification mark 30 may indicate a lot number assigned to a group of products that are produced at the same timing or may indicate a product number assigned to each product.

The identification marks 30 can differentiate among individual cylindrical batteries 10 or individual production lots, and are used to acquire the information about the production of the cylindrical battery 10. For example, a producer of a cylindrical battery 10 has a database including the information about the production of the cylindrical battery 10, the information being associated with the identification mark 30 of the cylindrical battery 10. Therefore, the identification mark 30 is read by a reading device such as a reader to specify the cylindrical battery 10, thereby making it possible to acquire the information about the production of the cylindrical battery 10. Examples of the information about the production of the cylindrical battery 10 include production process history records including the information such as a production line and production date.

The identification mark 30 is formed of at least one selected from numbers, characters, and identification codes, for example. The identification mark 30 may be a mark formed of a combination of numbers and characters. The identification code included in the identification mark 30 may be any of a one-dimensional code, a two-dimensional code, and a three-dimensional code, but is preferably a two-dimensional code. In the example illustrated in FIG. 2, a square two-dimensional code (QR code (registered trademark)) is formed as the identification mark 30.

It is sufficient that the identification mark 30 is readable using the reading device such as a reader, or the identification mark 30 may be formed of at least one selected from a protrusion and a recess. Alternatively, the identification mark 30 may have a different color from the surrounding area. The numbers, characters, or identification codes forming the identification mark 30 have no protrusion or recess, and only the color thereof may be different from the surrounding color.

The identification mark 30 may be formed by printing such as ink jet printing or pressing, and is preferably formed by laser marking. The laser marking is a method of forming a mark by irradiating the vent portion 22d with laser light. In a case where the identification mark 30 is formed by laser marking, a portion irradiated with laser light is discolored to form the mark, for example. In addition, a recess may be formed in the portion irradiated with laser light. Since the mark formed by laser marking is excellent in durability, a reading error is hard to occur even after the use of the cylindrical battery 10.

According to the above-described cylindrical battery 10, the sealing assembly 19 has the identification mark 30 formed on a portion movable away from the outer housing can 20 in a case where the internal pressure of the battery increases. This makes it possible to provide the identification mark 30 on the portion that is less likely to come into contact with another component in producing processes of a battery module including the battery and that is movable to be separated from the battery before being exposed to a high temperature due to heat abnormally generated in the battery. This can make it easy to read the identification mark both after the battery is mounted in the battery module and after heat is abnormally generated.

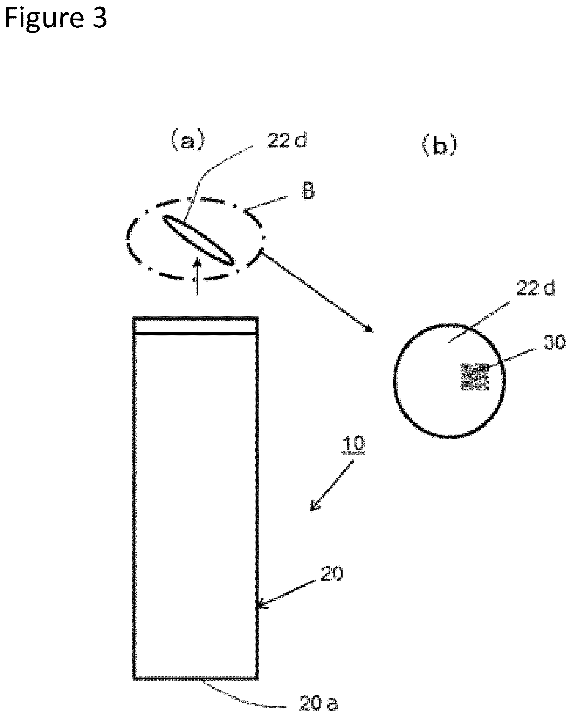

FIG. 3(a) is a schematic view illustrating a state in which, when heat is abnormally generated in the cylindrical battery 10, the vent portion 22d in the sealing assembly 19 blows away due to an increase in internal pressure of the battery, and FIG. 3(b) is a diagram illustrating an outer surface of the vent portion 22d illustrated in a portion B in FIG. 3(a).

FIG. 3 illustrates a state in which, when heat is abnormally generated in the cylindrical battery 10, the easily rupturable portion 22a (FIG. 1 and FIG. 2) ruptures around the entire circumference due to an increase in internal pressure of the battery, and the vent portion 22d blows away toward outside of the battery. The state in which the identification mark 30 is formed on the vent portion 22d that has blown away is maintained as illustrated in FIG. 3(b).

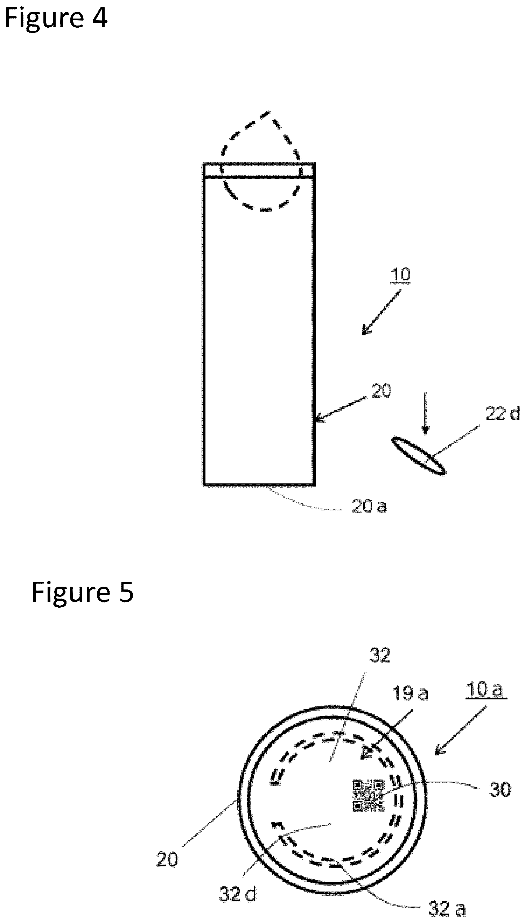

FIG. 4 is a schematic view illustrating a state in which after the state in FIG. 3(a), a temperature of the cylindrical battery 10 further rises. In FIG. 4, a state in which a large amount of heat is locally generated in an upper portion of the cylindrical battery 10 is indicated by a dashed line portion. For example, when the cylindrical battery 10 is used under very severe conditions or an excessively large force is applied from the outside to the cylindrical battery 10, firing occurs, and a possibility that a large amount of heat is locally generated cannot be zero. Also in this case, before such a large amount of heat is generated, the vent portion 22d on which the identification mark is formed is separated from the cylindrical battery 10 and falls to the periphery of the cylindrical battery 10. This makes it possible to suppress the difficulty in reading the identification mark 30 due to discoloration or deformation of the identification mark 30 caused by a heat influence of the cylindrical battery 10 on the identification mark 30.

In the above-described embodiment, the case has been described where the identification mark 30 is formed on the outer surface of the vent portion 22d, but the identification mark may be formed on the inner surface of the vent portion 22d. On the other hand, from the viewpoint of easy formation of the identification mark 30, the identification mark 30 is preferably formed on the outer surface of the vent portion 22d as in the embodiment of FIGS. 1 to 4.

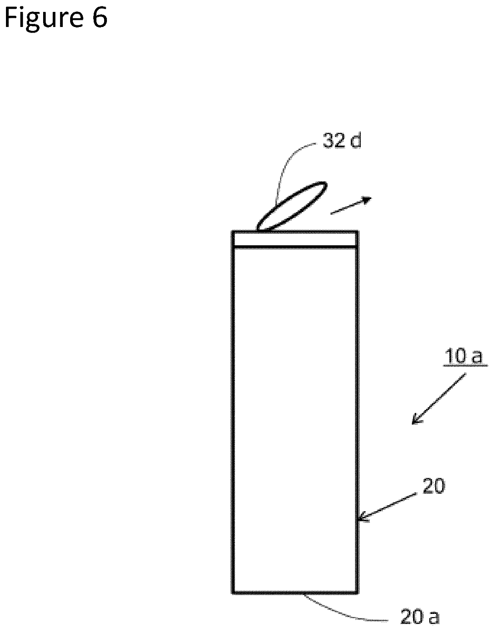

FIG. 5 is a diagram corresponding to FIG. 2(b), in a cylindrical battery 10a which is another example of the embodiment. FIG. 6 is a schematic view illustrating a state in which, when heat is abnormally generated, a rupture plate 32 of a sealing assembly 19a ruptures and a vent portion 32d is deformed to be moved outward, in another example of the embodiment.

In a configuration of this example, a thin thickness portion 32b forming an easily rupturable portion 32a of the rupture plate 32 is provided in a C shape on an inner surface of the rupture plate 32, but is not provided on the entire circumference. The vent portion 32d is formed by a portion on an inner side in the radial direction with respect to the easily rupturable portion 32a in the rupture plate 32. The identification mark 30 is formed on the outer surface of the vent portion 22d and on the inner side in the radial direction with respect to the easily rupturable portion 32a.

In the configuration of this example, when the heat is abnormally generated in the cylindrical battery 10a, the easily rupturable portion 32a ruptures due to an increase in internal pressure of the battery, so that a gas discharge port is formed, as illustrated in FIG. 6. This rupture enables the vent portion 22d to be moved toward the outside of the battery so that the vent portion 22d is moved away from the outer housing can 20 in a state in which, in a discontinuous portion of the easily rupturable portion 32a in a circumferential direction, the vent portion 22d is connected to the vicinity of the remaining outer periphery of the rupture plate 32. This makes it possible to suppress a temperature rise of the vent portion 22d that has been deformed toward outside even when the temperature of the cylindrical battery 10 further increases after the movement. This makes it possible to suppress the difficulty in reading the identification mark 30 due to discoloration or deformation of the identification mark 30 caused by a heat influence of the cylindrical battery 10 on the identification mark 30. In this example, the other configurations and functions are similar to the configuration in FIGS. 1 to 4.

### REFERENCE SIGNS LIST

10, 10a Cylindrical battery, 11 Positive electrode plate, 12 Negative electrode plate, 13 Separator, 14 Electrode assembly, 15, 16 Insulating plate, 17 Positive electrode lead, 18 Negative electrode lead, 19 Sealing assembly, 20 Outer housing can, 20a Bottom portion, 20b Grooved portion, 21 Internal terminal plate, 22 Rupture plate, 22a Easily rupturable portion, 22b Thin thickness portion, 22c Groove, 22d Vent portion, 23 Insulating plate, 23a Opening portion, 24 Gasket, 30 Identification mark, 32 Rupture plate, 32a Easily rupturable portion, 32b Thin thickness portion, 32d Vent portion

## Claims

1. A sealed battery, comprising:
an electrode assembly in which a positive electrode plate and a negative electrode plate are stacked with a separator interposed between the positive electrode plate and the negative electrode plate;
an outer housing body that houses the electrode assembly, and has an opening at one end of the outer housing body; and
a sealing assembly that closes the opening of the outer housing body, wherein
the sealing assembly has an identification mark formed on a portion movable away from the outer housing body in a case where an internal pressure of the battery increases.

2. The sealed battery according to claim 1, wherein
the sealing assembly has an easily rupturable portion formed in a ring shape or a C shape, and is crimped and fixed by the outer housing body via the gasket made of resin on an outer side in a radial direction with respect to the easily rupturable portion, and
the identification mark is formed on an inner side in the radial direction with respect to the easily rupturable portion.

3. The sealed battery according to claim 2, wherein
the easily rupturable portion is formed by a thin thickness portion.
